# FASCICULE DE BREVET EUROPEEN

(11) **EP 1 709 340 B1**
(45) Date de publication et mention de la délivrance du brevet: **16.04.2008**
(21) Numéro de dépôt: 03810002.0
(22) Date de dépôt: 18.12.2003
(51) Int. Cl.: F16D 13/64

(54) **DISQUE DE FRICTION D'EMBRAYAGE ET EMBRAYAGE COMPORTANT UN TEL DISQUE**
REIBSCHEIBE EINER REIBUNGSKUPPLUNG UND KUPPLUNG MIT EINER SOLCHEN SCHEIBE
CLUTCH FRICTION DISC AND CLUTCH COMPRISING SAME

(30) Priorité: 18.12.2002 FR 0216085
(43) Date de publication de la demande: 11.10.2006
(73) Titulaire: Valeo Matériaux de Friction, 87000 Limoges (FR)
(72) Inventeur: ALAS, Jacques, F-87800 Saint Priest Ligoure (FR); MARCHISSEAU, Michel, F-87100 Limoges (FR)
(74) Mandataire: Vignesoult, Serge L. M.
(86) Numéro de dépôt international: PCT/FR2003/050191
(87) Numéro de publication internationale: WO 2004/057203

(56) Documents cités:
- GB-A- 434 019
- US-A- 2 038 016
- US-A- 4 546 866

## Description

La présente invention concerne les embrayages, notamment pour véhicule automobile.

Comme on le sait, un embrayage comporte généralement un plateau de réaction destiné à être calé en rotation sur un arbre menant, un disque de friction, portant à sa périphérie externe des garnitures de friction et destiné à être calé en rotation sur un arbre mené, un plateau de pression, un couvercle fixé sur le plateau de réaction, des moyens élastiques à action axiale agissant entre le couvercle et le plateau de pression, le plateau de pression étant solidaire en rotation du couvercle tout en pouvant se déplacer axialement par rapport à lui.

Un disque de friction selon le préambule de la revendication 1 est connu de US-A-4,546,866.

Les garnitures de friction sont fixées sur un support élastique axialement en forme de voile ou de pales, en vue d'assurer une certaine progressivité lors du serrage des garnitures de friction entre les plateaux de réaction et de pression. Les surfaces de frottement côté garnitures et côté contre-matériaux sont globalement parallèles respectivement et perpendiculaires à l'axe de rotation de l'embrayage.

Dans les conditions d'utilisation peu sévères, telles que manoeuvres pour stationnement, démarrages à couple faible et moyen, changement des rapports, les énergies mises en jeu sont faibles et les contre-matériaux, plateaux de réaction et de pression, avec lesquels les garnitures de friction coopèrent en frottement, sont portés à des températures inférieures à 200°C voir inférieures à 100°C ; dans ces conditions, la géométrie des contre-matériaux n'est que faiblement affectée par l'échauffement généré, la portée des garnitures sur les contre-matériaux, et de ce fait la pression spécifique sur les garnitures sont bien réparties. Comme les performances des garnitures dépendent de l'agent de la température et de la pression spécifique, celles-ci restent excellentes.

Dans les conditions d'utilisation sévères, telles que démarrage du véhicule fortement chargé ou tractant une remorque ou une caravane, démarrage du véhicule dans de fortes pentes et/ou à des régimes moteur élevés avec forte accélération du véhicule, les énergies importantes dissipées lors du glissement entre garnitures et contre-matériaux dans ces conditions augmentent les températures des garnitures de friction et des contre-matériaux, lesquelles peuvent dépasser 200°C et même atteindre 300°C et plus.

Les faces de frottement des contre-matériaux sont soumises aux températures élevées ci-dessus alors que leurs faces opposées sont à des températures plus faibles, car affectées simplement par la température ambiante du carter de l'embrayage. Ces différences de température génèrent des dilatations différentes des contre-matériaux qui se traduisent par une mise en cône de ceux-ci. Cette mise en cône est toujours une mise en cône convexe de leur face frottante, c'est-à-dire que la face frottante sur son diamètre extérieur est en retrait par rapport à la face frottante sur son diamètre intérieur.

Le support axialement élastique des garnitures de friction ne peut pas toujours s'adapter complètement à cette nouvelle géométrie des contre-matériaux : il s'ensuit une perte d'efficacité de transmission de couple, pour les raisons suivantes.

La pression spécifique s'accroît rapidement dans la zone centrale de la garniture dont la température s'élève fortement, faisant chuter son coefficient de frottement ; par ailleurs, et surtout, le rayon moyen d'application de l'effort de serrage est réduit et le couple transmis est réduit d'autant.

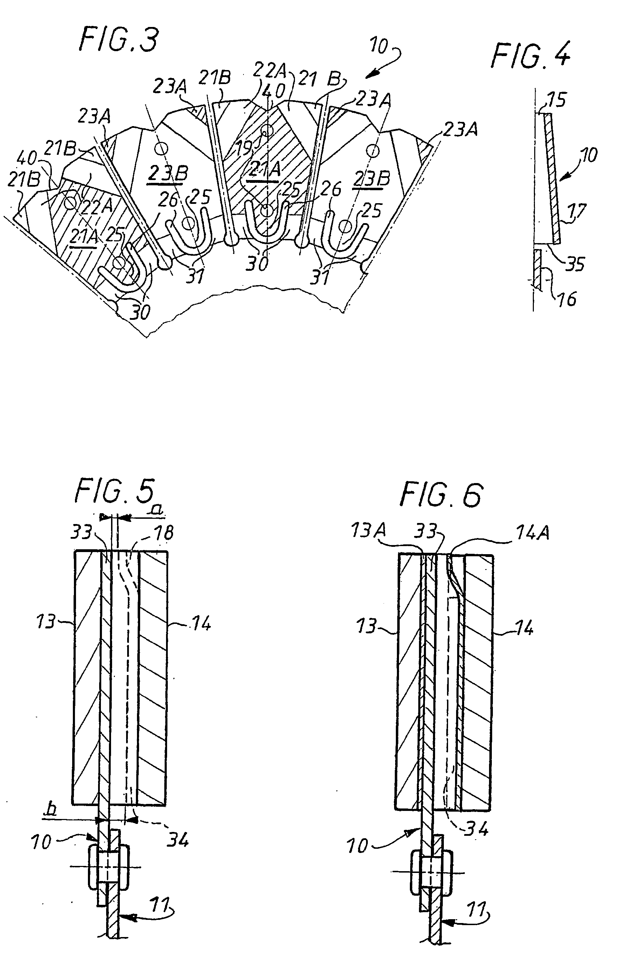

L'élasticité axiale du support n'étant pas suffisante pour obtenir une complète coopération des garnitures avec les contre-matériaux, tant sur leur diamètre intérieur qu'extérieur lors des mises en cône convexe de ceux-ci, on a proposé, notamment dans le document FR-A-2 772 851, de prévoir des moyens de limitation de course dans une zone moyenne qui correspond à un diamètre égal à 0,3 - 0,7 fois, mieux à 0,48 - 0,52 fois, la somme des diamètres extérieur et intérieur des garnitures ; comme cela est très visible sur la figure 5 du document cité ci-dessus, depuis la zone moyenne jusqu'au diamètre extérieur, le support axialement élastique est détendu et on retrouve les inconvénients cités ci-dessus ; de plus, la forte pression est dans cette zone moyenne.

La présente invention a pour but d'éviter ces inconvénients.

Selon l'invention, un disque porte-garnitures propre à la constitution d'un disque de friction, notamment pour véhicule automobile, du genre comportant une partie centrale et une partie périphérique propre à recevoir des garnitures de friction et comportant au moins une zone de portée pour contact avec l'une au moins des garnitures de friction et fixation de celles-ci, ladite partie périphérique étant axialement élastique et adaptée à fléchir, sous effort axial, tant au droit de son diamètre intérieur qu'au droit de son diamètre extérieur, la course axiale de fléchissement au droit de son diamètre intérieur étant supérieure à celle au droit de son diamètre extérieur, caractérisé par le fait que à l'état libre, les faces externes de frottement des garnitures, fixées sur le support élastique axialement, sont parallèles en étant perpendiculaires à l'axe du disque.

Ici, la forte pression est proche du diamètre extérieur.

Avantageusement, la partie périphérique est formée d'un simple flan cambré présentant des plis délimitant une alternance de portées d'appui pour l'une des garnitures de friction et de portées d'appui pour l'autre de celles-ci.

De préférence, la partie périphérique est fractionnée en pales, chacune se raccordant à ladite partie centrale par un pied.

De préférence, certaines au moins desdites pales, dites pales tripodes, présentent une zone centrale de portée, pour contact avec l'une des garnitures de friction et fixation de celle-ci, et deux zones périphériques de portée, de part et d'autre de ladite zone centrale, pour contact avec l'autre desdites garnitures de friction.

Avantageusement, la zone centrale de portée est raccordée, d'une part, à la partie centrale du disque porte-garnitures par un pli tangentiel perpendiculaire à l'axe de symétrie radial desdites pales tripodes et, d'autre part, auxdites zones périphériques par des plis obliques par rapport à l'axe de symétrie radial desdites pales tripodes.

De préférence, la différence de courses axiales est obtenue par une limitation de la course au droit du diamètre extérieur.

Avantageusement, ladite limitation est obtenue par une patte de butée portée par la partie de la partie périphérique qui porte une garniture et dirigée vers l'autre partie qui porte l'autre garniture.

Selon une autre forme de réalisation, les garnitures sont assujetties aux parties de la partie périphérique par l'intermédiaire de plaquettes métalliques et c'est l'une de ces plaquettes qui présente une patte de butée dirigée vers l'autre garniture à la faveur d'une découpe ménagée dans la partie de la partie périphérique qui la porte.

Selon une autre forme de réalisation, la partie périphérique est galbée et cintrée en sorte que l'une au moins des parties associée à une garniture fait un angle avec le plan de la partie centrale, en s'en rapprochant vers la périphérie ; les deux parties associées aux garnitures sont inclinées l'une vers l'autre de l'intérieur vers l'extérieur.

Selon une autre forme de réalisation, le disque est en deux pièces disposées dos à dos solidarisées à la partie centrale, lesdites pièces étant inclinées l'une vers l'autre de l'intérieur vers l'extérieur.

Selon une autre forme de réalisation, l'une des garnitures porte un plot s'étendant axialement à sa périphérie extérieure à la faveur d'une échancrure ménagée dans la partie périphérique qui la porte.

En variante, la différence de courses axiales est obtenue en rendant possible une augmentation de la course intérieure ; de préférence, des plots sont ménagés sur la face interne d'une garniture, à sa périphérie intérieure, au droit de creusures ménagées à la périphérie interne de l'autre garniture.

De préférence, les garnitures ont, en coupe axiale, une forme rectangulaire.

Avantageusement, les garnitures ont, en coupe axiale, une forme trapézoïdale.

De préférence, les garnitures sont fixées par rivetage.

Avantageusement, les garnitures sont fixées par collage.

L'invention a également pour objet un embrayage, notamment pour véhicule automobile, comportant un plateau de réaction destiné à être calé en rotation sur un arbre menant, un disque de friction, portant à sa périphérie externe des garnitures de friction et destiné à être calé en rotation sur un arbre mené, un plateau de pression, un couvercle fixé sur le plateau de réaction, des moyens élastiques à action axiale agissant entre le couvercle et le plateau de pression, le plateau de pression étant solidaire en rotation du couvercle tout en pouvant se déplacer axialement par rapport à lui, caractérisé par le fait que le disque de friction comporte un disque porte-garnitures tel que ci-dessus.

Avantageusement, le plateau de réaction est le plateau secondaire d'un double volant amortisseur à deux plateaux primaire et secondaire.

De préférence, l'embrayage est équipé d'un dispositif de rattrapage du jeu dû à l'usure des garnitures.

Pour mieux faire comprendre l'objet de l'invention, on va en décrire maintenant, à titre d'exemples, purement illustratifs et non limitatifs, des modes de réalisation représentés sur les dessins annexés.

Sur ces dessins :
- la figure 1 est une vue partielle en coupe axiale d'un disque de friction d'embrayage ;
- la figure 2 est une vue partielle en plan du disque de support de garnitures selon l'invention ;
- la figure 3 est une vue analogue à la figure 2 montrant une variante ;
- la figure 4 est une section selon IV-IV de la figure 2 ;
- les figures 5 à 10 sont des vues schématiques partielles de disques de friction selon l'invention, chacune montrant une variante ;
- la figure 11 est une vue de la tranche intérieure d'un disque selon l'invention vu depuis son centre ;
- la figure 12 est une vue partielle en coupe axiale d'un embrayage de l'art antérieur à l'état débrayé ;
- la figure 13 est une vue analogue à la figure 12 d'un embrayage selon l'invention ;
- la figure 14 est une vue analogue à la figure 12, l'embrayage étant à l'état embrayé avec faible sollicitation thermique ;
- la figure 15 est une vue analogue à la figure 14 d'un embrayage selon l'invention ;
- la figure 16 est une vue analogue à la figure 12, l'embrayage étant à l'état embrayé avec forte sollicitation thermique ;
- la figure 17 est une vue analogue à la figure 16 d'un embrayage selon l'invention.

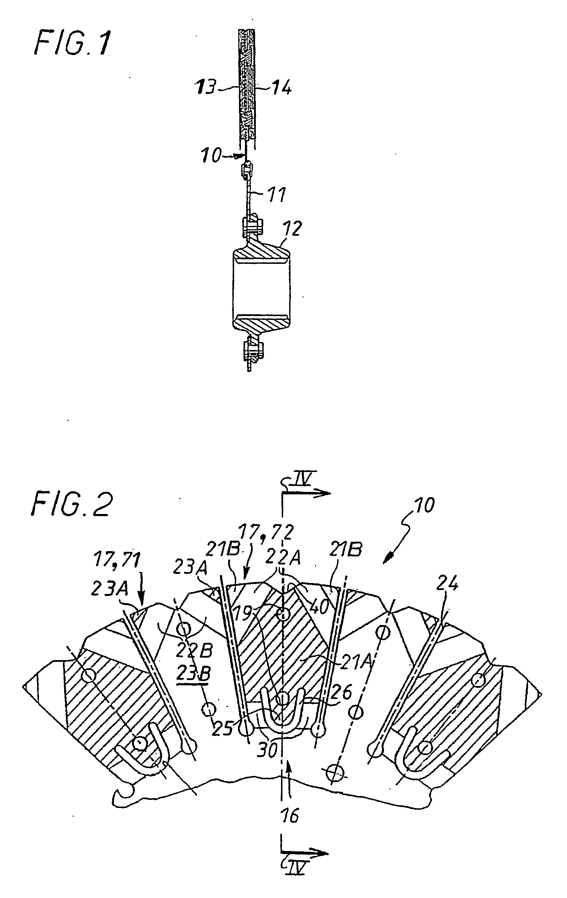

En se reportant aux figures 1et 2, on voit qu'un disque de friction pour embrayage de véhicule automobile comprend un disque porte-garnitures 10 solidaire d'un voile 11 lui-même solidaire d'un moyeu 12.

En variante, le disque de friction comporte deux parties coaxiales montées mobiles l'une par rapport à l'autre à l'encontre d'organes élastiques à action circonférentielle et de moyens de frottement à action axiale ; pour mémoire, on rappellera que l'une des parties comporte deux rondelles de guidage et le disque porte-garnitures, tandis que l'autre partie coaxiale comporte le voile solidaire en rotation du moyeu.

Selon une autre variante, les structures sont inversées et le disque porte-gamitures est solidaire du voile mobile par rapport au moyeu, tandis que les rondelles de guidage sont solidaires du moyeu.

Le disque porte-garnitures 10 comporte une partie centrale annulaire plate 16 et une partie périphérique fragmentée en pales, globalement d'orientation radiale, décrites ci-après.

Le disque porte-garnitures 10 est équipé de deux garnitures de friction annulaires 13, 14, montées dos à dos.

Dans un embrayage, ces garnitures sont normalement serrées entre les plateaux de pression et de réaction, non représentés, de l'embrayage ; ces plateaux sont solidaires en rotation du vilebrequin du moteur à combustion interne du véhicule.

Ainsi, le couple est transmis desdits plateaux au moyeu 12 à alésage interne cannelé pour liaison en rotation avec l'arbre d'entrée de la boîte de vitesses.

En position embrayage désengagé, les garnitures 13, 14 ne sont pas en contact avec lesdits plateaux.

Les pales 17 s'étendent radialement en saillie à la périphérie externe de la partie centrale 16 du disque, en étant d'un seul tenant avec ladite partie centrale ; ces pales 17 sont métalliques, comme la partie centrale 16, et réparties en deux groupes alternés 71, 72, chaque pale d'un même groupe étant décalée circonférentiellement par rapport à la pale de l'autre groupe, l'angle entre deux pales consécutives étant ici de l'ordre de 20 degrés.

Ces pales radiales ont une forme de tripode avec trois zones planes de portée ou d'appui, respectivement 21A, 21 B - 23A, 23B.

En considérant par exemple la pale 72, on voit que celle-ci est symétrique et comporte une grande zone plane centrale de portée 21A pour contact avec la couronne de garniture concernée et fixation de celle-ci, ladite zone 21A présentant pour ce faire des trous 19 pour le passage de rivets.

Cette zone se rétrécit en direction de la périphérie externe du disque porte-garnitures ; elle a globalement une forme triangulaire à sa périphérie externe ; ici, cette partie triangulaire a une pointe tronquée ; la partie interne de la zone centrale est donc plus large circonférentiellement que sa partie externe rétrécie.

La pale 72 présente également deux zones planes de portée 21B coplanaires propres à coopérer avec l'autre garniture de friction. Ces zones 21B dites périphériques s'étendent à la périphérie externe de la pale et forment des oreilles ; les zones 21B s'étendent de part et d'autre de la zone centrale 21A. Elles ont une forme triangulaire et sont raccordées à la zone 21A par des plis obliques 22A, symétriques par rapport à l'axe radial de symétrie de la pale. Les zones 21B et 21A sont donc décalées axialement.

La zone 21A se raccorde à la partie centrale 16 par un pli 30 d'orientation tangentielle, ou pli longitudinal, ici perpendiculaire à l'axe de symétrie radial de la pale : ainsi, la zone centrale 21A est décalée axialement par rapport à la partie centrale 16.

A sa périphérie externe, la pale présente centralement une échancrure 40.

Des fentes radiales 24 séparent les, pales 71, 72 ; ces fentes débouchent à la périphérie externe du disque porte-garnitures et ont une extrémité interne fermée, de forme circulaire, pour raccordement aux plis 30, 31 et à la partie centrale 16.

Au moins certaines pales, ici les pales 72, ont une zone centrale de portée prolongée centralement en 25 radialement vers l'intérieur à la faveur d'une découpe 26 affectant le pli longitudinal 30 ; ainsi, deux trous 19 espacés radialement permettent la fixation de la garniture de friction.

Ici, les pales 71 ont une zone centrale de portée 23B située dans le plan de la partie centrale 16 ; mais, elles pourraient être analogues aux pales 72, comme illustré figure 3.

La pale 71 a une forme symétrique identique à celle de la pale 72 mais sa zone centrale plane 23B est décalée axialement par rapport à la zone centrale 21A ; cette zone centrale 23B est dans le plan des zones 21B de la pale 72. De même, les deux zones planes 23A périphériques de la pale 71 sont décalées axialement par rapport à la zone centrale 23B en étant dans le plan de la zone centrale 21 A.

Les zones 23A sont raccordées à la zone 23B par des plis obliques 22B dirigés axialement en sens inverse par rapport aux plis obliques 22A. La zone centrale 23B est raccordée à la partie centrale 16 par un pli tangentiel 31 dirigé axialement en sens inverse du pli tangentiel 30.

Chaque pale présente donc une zone centrale de portée, pour contact avec l'une des garnitures de friction et fixation de celle-ci, et deux zones périphériques externes de portée, pour contact avec l'autre garniture de friction lesdites zones centrales étant décalées axialement par rapport aux zones périphériques et ici à ladite partie centrale 16 du disque porte-gamitures.

Selon l'invention, les zones centrales et périphériques ne s'étendent pas dans des plans parallèles au plan moyen de la partie centrale, mais font un angle entre elles, en étant inclinées de telle sorte qu'elles se rapprochent d'autant plus l'une de l'autre que le diamètre augmente.

Ainsi, comme visible sur la figure 4, la course 35 de fléchissement des pales 17 au droit de leur diamètre intérieur est supérieure à celle 15 au droit de leur diamètre extérieur ; cette différence de courses est de l'ordre de 0,2 à 0,8 millimètre, ou mieux de 0,3 à 0,5 millimètre, quels que soient les diamètres intérieur et extérieur.

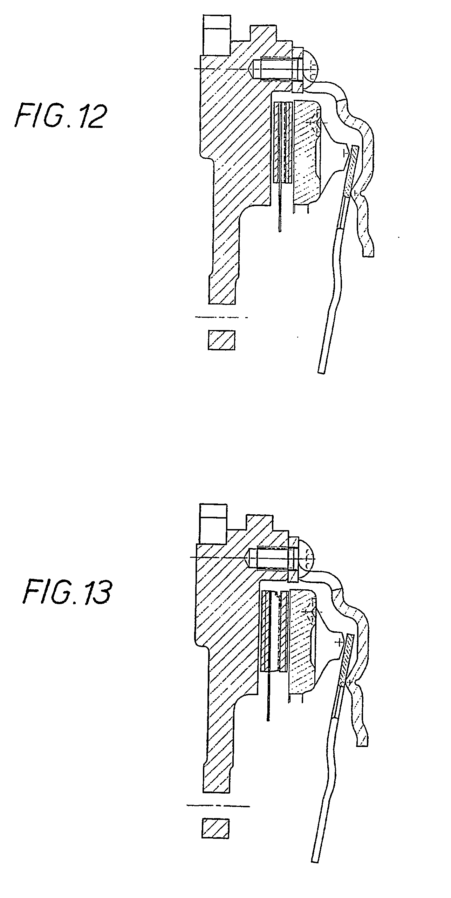

Sur les figures 12 à 17, on a représenté un embrayage dans trois positions de travail à savoir débrayé, embrayé avec faible sollicitation thermique et embrayé avec forte sollicitation thermique, comparativement de l'art antérieur, figures 12, 14 et 16 et selon l'invention, figures 13, 15 et 17.

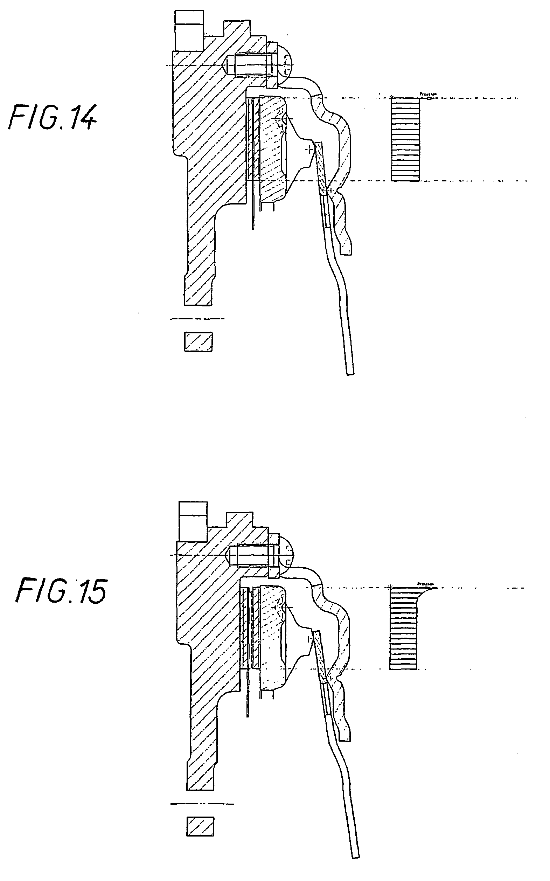

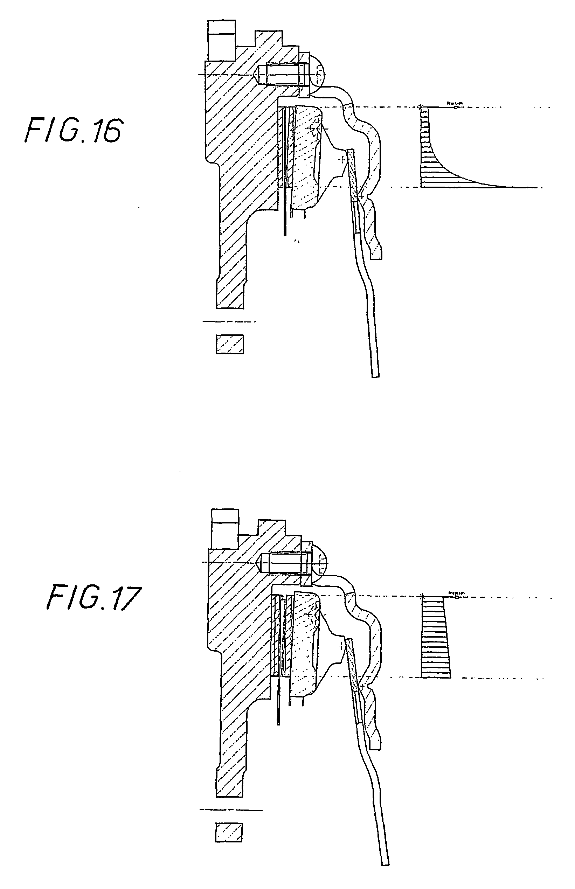

Sur les figures 14 à 17, a été représenté également, sur la droite de ces figures, un diagramme de répartition des pressions affectant les faces de frottement. La comparaison des figures 16 et 17 illustre bien les avantages de l'invention comme explicités au début de la description.

Bien entendu, cette différence de courses extérieure et intérieure peut être obtenue de différentes manières, applicables à toutes sortes de pales ; en effet, comme on le sait, d'autres pales que des pales tripodes sont utilisées pour la réalisation de disques porte-garnitures, telles que par exemple des pales en forme de drapeaux, s'étendant circonférentiellement depuis leur pied en présentant des plis quasi radiaux pour coopération avec l'une et l'autre des garnitures, ou des pales dites doubles qui s'étendent circonférentiellement de part et d'autre de leur pied en ayant également des plis radiaux.

Sur la figure 5, on a montré schématiquement une pale dont la partie 33 reçoit la garniture 13 et la partie 34 la garniture 14 ; ici, les parties 33, 34 et les faces des garnitures 13, 14 sont toutes parallèles au plan du voile 11 et la différence de courses est obtenue par une patte de butée 18 portée par la partie 34 au droit de son diamètre extérieur et dirigée vers la partie 33 ; sur la figure 6, les garnitures 13, 14 sont assujetties aux parties 33, 34 de la pale par l'intermédiaire de plaquettes métalliques 13A, 14A qui les portent, avantageusement par collage, et c'est la plaquette métallique 14A qui présente une patte de butée dirigée vers la partie 33 à la faveur d'une découpe ménagée dans la partie 34 de la pale ; ces pattes de butée 18 couvrent circonférentiellement une bonne partie des 360 degrés pour avoir une bonne répartition de la pression de serrage.

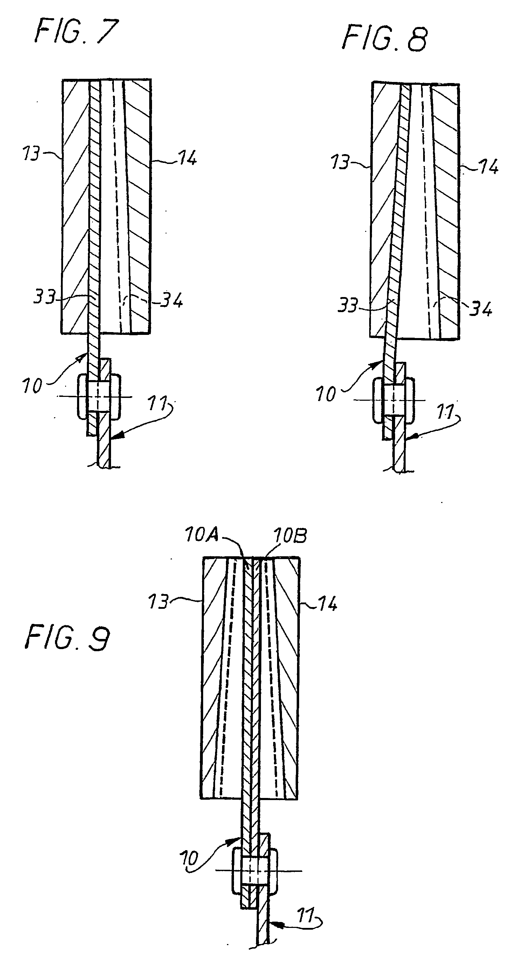

Sur la figure 7, la pale est galbée et cintrée en sorte que la partie 33 associée à la garniture 13 s'étend dans un plan parallèle à celui du voile 11 alors que la partie 34 associée à la garniture 14 fait un angle avec le plan du voile 10, en se rapprochant vers la périphérie.

Pour assurer un bon parallélisme des faces frottantes des garnitures et des contre-matériaux, dès le début de la mise en charge du disque, on fait en sorte que, au repos, à l'état libre, les faces frottantes des garnitures 13, 14 soient parallèles ; dès lors, dans l'exemple de la figure 7, les deux faces de la garniture 13 sont parallèles, alors que la section de la garniture 14 est de forme trapézoïdale, à petite base côté diamètre intérieur ; cette forme est obtenue soit par moulage, soit par usinage.

Selon la figure 8, les deux parties 33 et 34 sont inclinées par rapport au voile 10, et l'une vers l'autre de l'intérieur vers l'extérieur, et les deux garnitures 13 et 14 sont à section trapézoïdale.

Selon la figure 9, le disque 10 est en deux pièces 10A, 10B disposées dos à dos et solidarisées toutes deux au voile 11, lesdites pièces étant alors inclinées l'une vers l'autre de l'intérieur vers l'extérieur.

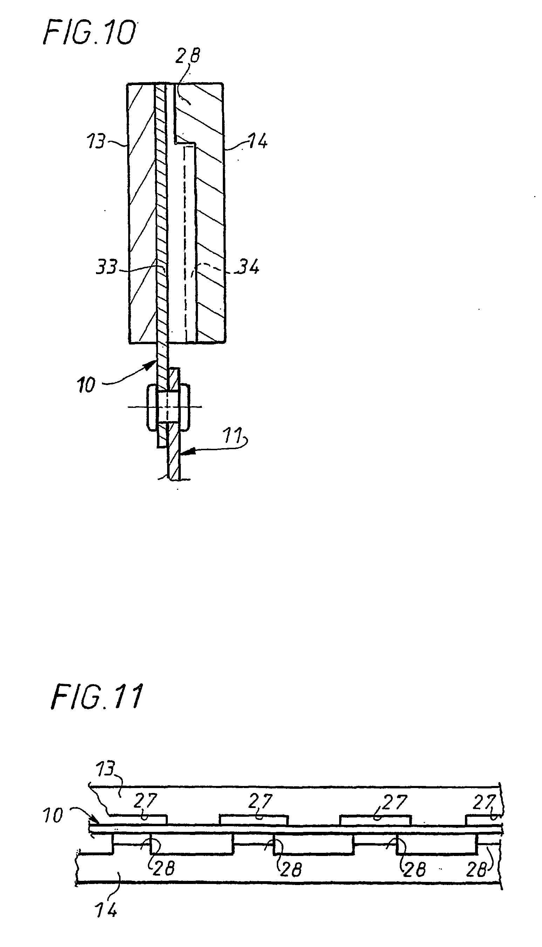

La figure 10 montre une disposition selon laquelle la différence de courses extérieure et intérieure est obtenue grâce à la présence d'un plot 28 s'étendant axialement à la périphérie extérieure de la face interne de la garniture 14, à la faveur d'une échancrure ménagée à la périphérie de la partie 34 de la pale, ledit plot 28 limitant la course d'écrasement à la périphérie extérieure du disque porte-garnitures 10.

Selon les variantes ci-dessus, la différence de courses extérieure et intérieure est obtenue en limitant la course extérieure.

Bien entendu, l'inverse est possible, c'est-à-dire que cette différence peut être obtenue en rendant possible une augmentation de la course intérieure.

Un exemple d'une telle disposition est montré figure 11 qui est une vue de la tranche intérieure du disque vu depuis son centre ; dans cette partie radialement intérieure, des plots 28 ménagés sur la face interne de la garniture 14, au droit de creusures 27 ménagées à la périphérie interne de l'autre garniture 13, pénètrent, sous effort axial et grâce à l'élasticité du disque 10 qu'ils déforment, à l'intérieur desdites creusures 27.

Toutes ces dispositions décrites à propos des figures 5 à 11 sont applicables à tout type de pales, y compris aux pales tripodes décrites à propos des figures 1 à 3.

D'une façon générale, on préfère que, en fonctionnement normal, la limitation de course ne soit pas franche et brutale mais plutôt élastique et progressive.

La fixation des garnitures sur les pales peut se faire classiquement par rivets ou collage; lorsqu'elles sont collées, l'épaisseur totale des garnitures est moindre car il n'y a pas nécessité d'épaisseur de matière sous la tête des rivets.

L'invention s'applique à un embrayage dans lequel le plateau de réaction est le plateau secondaire d'un double volant amortisseur à deux plateaux primaire et secondaire ; dans un tel embrayage, comme on le sait, les deux plateaux ont une épaisseur réduite et ils ont donc tendance à se déformer davantage en conditions sévères ; ainsi, l'invention s'applique bien à ce genre d'embrayage.

On pourra noter également que lorsque l'embrayage est équipé d'un dispositif de rattrapage du jeu dû à l'usure qui permet, comme on le sait, de conserver au diaphragme une même position à l'état embrayé quelle que soit l'usure des garnitures et donc de disposer d'une charge constante au plateau, il est plus facile d'ajuster les différents jeux de fonctionnement.

## Revendications

1. Disque de friction, notamment pour véhicule automobile, comprenant des garnitures de friction (13, 14) et un disque porte-garnitures du genre comportant une partie centrale (16) et une partie périphérique (17) propre à recevoir les garnitures de friction (13, 14) et comportant au moins une zone de portée (21A - 21 B, 23A - 23B) pour contact avec l'une au moins des garnitures de friction (13,14) et fixation de celles-ci, ladite partie périphérique étant axialement élastique et adaptée à fléchir, sous effort axial, tant au droit de son diamètre intérieur qu'au droit de son diamètre extérieur, la course axiale de fléchissement au droit de son diamètre intérieur étant supérieure à celle au droit de son diamètre extérieur, **caractérisé par le fait que**, à l'état libre, les faces externes des garnitures (13, 14) sont parallèles en étant perpendiculaires à l'axe du disque.

2. Disque de friction selon la revendication 1, **caractérisé par le fait que** la partie périphérique est formée d'un simple flan cambré présentant des plis délimitant une alternance de portées d'appui (21A, 21B -23A, 23B -33,34) pour l'une des garnitures de friction et de portées d'appui pour l'autre de celles-ci.

3. Disque de friction selon l'une des revendications 1 ou 2, **caractérisé par le fait que** la partie périphérique est fractionnée en pales (17), chacune se raccordant à ladite partie centrale (16) par un pied (30).

4. Disque de friction selon la revendication 3, **caractérisé par le fait que** certaines au moins desdites pales, dites pales tripodes (72, 71), présentent une zone centrale de portée (21A, 23B), pour contact avec l'une des garnitures de friction et fixation de celle-ci, et deux zones périphériques de portée (21 B, 23A), de part et d'autre de ladite zone centrale, pour contact avec l'autre desdites garnitures de friction.

5. Disque de friction selon la revendication 4, **caractérisé par le fait que** la zone centrale de portée (21A) est raccordée, d'une part, à la partie centrale (16) du disque porte-garnitures par un pli tangentiel (30) perpendiculaire à l'axe de symétrie radial desdites pales tripodes et, d'autre part, auxdites zones périphériques (21B) par des plis obliques (22A) par rapport à l'axe de symétrie radial desdites pales tripodes.

6. Disque de friction selon l'une des revendications 1 à 5, **caractérisé par le fait que** la différence de courses axiales est obtenue par une limitation de la course au droit du diamètre extérieur.

7. Disque de friction selon la revendication 6, **caractérisé par le fait que** ladite limitation est obtenue par une patte de butée (18) portée par la partie (34) de la partie périphérique qui porte une garniture (14) et dirigée vers l'autre partie (33) qui porte l'autre garniture (13).

8. Disque de friction selon la revendication 7, **caractérisé par le fait que** les garnitures (13, 14) sont assujetties aux parties (33, 34) de la partie périphérique par l'intermédiaire de plaquettes métalliques (13A, 14A) et c'est l'une de ces plaquettes (14A) qui présente une patte de butée dirigée vers l'autre garniture à la faveur d'une découpe ménagée dans la partie (34) de la partie périphérique qui la porte.

9. Disque de friction selon la revendication 7, **caractérisé par le fait que** la partie périphérique est galbée et cintrée en sorte que l'une (34) au moins des parties (33, 34) associée à une garniture (14) fait un angle avec le plan de la partie centrale (10), en s'en rapprochant vers la périphérie.

10. Disque de friction selon la revendication 9, **caractérisé par le fait que** les deux parties (33,34) associées aux garnitures (13, 14) sont inclinées l'une vers l'autre de l'intérieur vers l'extérieur.

11. Disque de friction selon la revendication 6, **caractérisé par le fait que** le disque (10) est en deux pièces (10A, 10B) disposées dos à dos solidarisées à la partie centrale (11), lesdites pièces (10A, 10B) étant inclinées l'une vers l'autre de l'intérieur vers l'extérieur.

12. Disque de friction selon la revendication 6, **caractérisé par le fait que** l'une (14) des garnitures (13,14) porte un plot (28) s'étendant axialement à sa périphérie extérieure à la faveur d'une échancrure ménagée dans la partie périphérique (34) qui la porte.

13. Disque de friction selon l'une des revendications 1 à 5, **caractérisé par le fait que** la différence de courses axiales est obtenue en rendant possible une augmentation de la course intérieure.

14. Disque de friction selon la revendication 13, **caractérisé par le fait que** des plots (28) sont ménagés sur la face interne d'une garniture (14), à sa périphérie intérieure, au droit de creusures (27) ménagées à la périphérie interne de l'autre garniture (13).

15. Disque de friction selon l'une des revendications 1 à 14, **caractérisé par le fait que** les garnitures ont, en coupe axiale, une forme rectangulaire.

16. Disque de friction selon l'une des revendications 1 à 14, **caractérisé par le fait que** les garnitures ont, en coupe axiale, une forme trapézoïdale.

17. Disque de friction selon l'une des revendications 1 à 16, **caractérisé par le fait que** les garnitures (13,14) sont fixées par rivetage.

18. Disque de friction selon l'une des revendications 1 à 16, **caractérisé par le fait que** les garnitures (13,14) sont fixées par collage.

19. Embrayage, notamment pour véhicule automobile, comportant un plateau de réaction destiné à être calé en rotation sur un arbre menant, un disque de friction, portant à sa périphérie externe des garnitures de friction et destiné à être calé en rotation sur un arbre mené, un plateau de pression, un couvercle fixé sur le plateau de réaction, des moyens élastiques à action axiale agissant entre le couvercle et le plateau de pression, le plateau de pression étant solidaire en rotation du couvercle tout en pouvant se déplacer axialement par rapport à lui, **caractérisé par le fait que** le disque de friction est selon l'une des revendications 1 à 18.

20. Embrayage selon la revendication 19, **caractérisé par le fait que** le plateau de réaction est le plateau secondaire d'un double volant amortisseur à deux plateaux primaire et secondaire.

21. Embrayage selon l'une des revendications 19 ou 20, **caractérisé par le fait qu'**il est équipé d'un dispositif de rattrapage du jeu dû à l'usure des garnitures.

## Claims

1. A friction disc, in particular for a motor vehicle, comprising friction liners (13, 14) and a liner carrier disc, of the kind comprising a central portion (16) and a peripheral portion (17) adapted to receive the friction liners (13, 14), and including at least one engagement zone (21A - 21 B, 23A - 23B) for contact with at least one of the friction liners (13, 14) and fastening of the latter, the said peripheral portion being axially elastic and adapted to flex under axial applied force, both in line with its internal diameter and in line with its external diameter, the resulting axial flexing displacement in line with its internal diameter being greater than that in line with its external diameter, **characterised by** the fact that, in the free state, the external faces of the liners (13, 14) are parallel, being at right angles to the axis of the disc.

2. A friction disc according to Claim 1, **characterised by** the fact that the peripheral portion consists of a simple profiled plate element having bends which delimit engagement surfaces (21A, 21B - 23A, 23B - 33, 34) for one of the friction liners, and engagement surfaces for the other one of the latter, arranged alternately.

3. A friction disc according to Claim 1 or Claim 2, **characterised in that** the peripheral portion is divided into blades (17), each of which is joined to the said central portion (16) through a foot (30).

4. A friction disc according to Claim 3, **characterised by** the fact that at least some of the said blades, referred to as tripod blades (72, 71), have a central engagement zone (21A, 23B), for contact with one of the friction liners and fastening of the latter, together with two peripheral engagement zones (21 B, 23A) on either side of the said central zone, for contact with the other one of the said friction liners.

5. A friction disc according to Claim 4, **characterised by** the fact that the central engagement zone (21 A) is joined, firstly, to the central portion (16) of the liner carrier disc through a tangential bend (30) at right angles to the radial axis of symmetry of the said tripod blades, and, secondly, to the said peripheral zones (21 B) through bends (22A) which are oblique with respect to the radial axis of symmetry of the said tripod blades.

6. A friction disc according to one of Claims 1 to 5, **characterised by** the fact that the difference in axial displacements is obtained by limiting the displacement in line with the external diameter.

7. A friction disc according to Claim 6, **characterised by** the fact that the said limitation is obtained by means of an abutment lug (18) carried by the portion (34) of the peripheral portion that carries a liner (14) and directed towards the other portion (33) that carries the other liner (13).

8. A friction disc according to Claim 7, **characterised by** the fact that the liners (13, 14) are attached to the portions (33, 34) of the peripheral portion through interposed metallic plate elements (13A, 14A), and it is one of the said plate elements (14A) that has an abutment lug extending towards the other liner, by virtue of a cut-out formed in the portion (34) of the peripheral portion that carries it.

9. A friction disc according to Claim 7, **characterised by** the fact that the peripheral portion is profiled and curved, in such a way that at least one (34) of the portions (33, 34) associated with a liner (14) makes an angle with the plane of the central portion (10), to which it is closer towards the periphery.

10. A friction disc according to Claim 9, **characterised by** the fact that the two portions (33, 34) associated with the liners (13, 14) are inclined towards each other from the inside towards the outside.

11. A friction disc according to Claim 6, **characterised by** the fact that the disc (10) is in two parts (10A, 10B) disposed back-to-back and fixed with respect to the central portion (11), the said parts (10A, 10B) being inclined towards each other from the inside towards the outside.

12. A friction disc according to Claim 6, **characterised by** the fact that one (14) of the liners (13, 14) carries a pad (28) which extends axially at its outer periphery into a notch formed in the peripheral portion (34) that carries it.

13. A friction disc according to one of Claims 1 to 5, **characterised by** the fact that the difference in axial displacements is obtained by making possible an increase in the internal deflection.

14. A friction disc according to Claim 13, **characterised by** the fact that pads (28) are formed on the internal face of a liner (14), at its inner periphery, in line with reliefs (27) formed at the inner periphery of the other liner (13).

15. A friction disc according to one of Claims 1 to 14, **characterised by** the fact that the liners have a rectangular form in axial cross section.

16. A friction disc according to one of Claims 1 to 14, **characterised by** the fact that the liners have a trapezoidal form in axial cross section.

17. A friction disc according to one of Claims 1 to 16, **characterised by** the fact that the liners (13, 14) are secured by riveting.

18. A friction disc according to one of Claims 1 to 16, **characterised by** the fact that the liners (13, 14) are secured by adhesive bonding.

19. A clutch, in particular for a motor vehicle, comprising a reaction plate adapted to be mounted in rotation on a driving shaft, a friction disc carrying friction liners at its outer periphery and adapted to be mounted in rotation on a driven shaft, a pressure plate, a cover plate secured on the reaction plate, and axially acting resilient means for acting between the cover plate and the pressure plate, the pressure plate being rotatable with the cover plate while being displaceable axially with respect thereto, **characterised by** the fact that the friction disc is in accordance with one of Claims 1 to 18.

20. A clutch according to Claim 19, **characterised by** the fact that the reaction plate is the secondary plate of a double damping flywheel having two plates, namely a primary plate and a secondary plate.

21. A clutch according to Claim 19 or Claim 20, **characterised by** the fact that it is equipped with a device for taking up clearance due to wear in the liners.

## Patentansprüche

1. Reibscheibe, insbesondere für Kraftfahrzeuge, umfassend Reibbeläge (13, 14) und eine Belagträgerscheibe, welche einen Mittelteil (16) und einen zur Aufnahme der Reibbeläge (13, 14) geeigneten Umfangsteil (17) aufweist, und welche mindestens eine Trägerzone (21A - 21 B, 23A - 23B) für den Kontakt und die Befestigung mindestens eines der Reibbeläge (13, 14) aufweist, wobei der besagte Umfangsteil axial elastisch und dazu geeignet ist, unter einer axialen Kraft im Bereich seines Innendurchmessers sowie im Bereich seines Außendurchmessers nachzugeben, wobei der axiale Hub des Nachgebens im Bereich seines Innendurchmessers größer ist als der im Bereich seines Außendurchmessers, **dadurch gekennzeichnet, dass** im freien Zustand die Außenflächen der Reibbeläge (13, 14) parallel zueinander und senkrecht zur Achse der Scheibe sind.

2. Reibscheibe nach Anspruch 1,**dadurch gekennzeichnet, dass** der Umfangsteil aus einer einfachen gebogenen Platte ausgebildet ist, welche Falze aufweist, die eine Abwechslung von Trägern zur Auflage (21A, 21 B - 23A, 23B - 33, 34) für einen der Reibbeläge und von Trägern zur Auflage für den anderen der Reibbeläge begrenzen.

3. Reibscheibe nach Anspruch 1 oder 2, **dadurch gekennzeichnet, dass** der Umfangsteil in Segmente (17) aufgeteilt ist, die sich jeweils über einen Fuß (30) an den Mittelteil (16) anschließen.

4. Reibscheibe nach Anspruch 3, **dadurch gekennzeichnet, dass** mindestens einige der besagten Segmente, die als Dreifuß-Segmente (71, 72) bezeichnet werden, eine zentrale Trägerzone (21A, 23B) für den Kontakt und die Befestigung eines der Reibbeläge, sowie zwei Umfangs-Trägerzonen (21 B, 23A) auf beiden Seiten der zentralen Zone für den Kontakt mit dem anderen der Reibbeläge aufweisen.

5. Reibscheibe nach Anspruch 4, **dadurch gekennzeichnet, dass** die zentrale Trägerzone (21A) einerseits durch einen senkrecht zur radialen Symmetrieachse der besagten Dreifuß-Segmente verlaufenden tangentialen Falz (30) an den Mittelteil (16) der Belagträgerscheibe, und andererseits durch schräg zur radialen Symmetrieachse der besagten Dreifuß-Segmente liegende Falze (22A) an die Umfangs-Trägerzonen (21 B) angeschlossen ist.

6. Reibscheibe nach einem der Ansprüche 1 bis 5, **dadurch gekennzeichnet, dass** der Unterschied der axialen Hübe durch eine Begrenzung des Hubes im Bereich des Außendurchmessers erreicht wird.

7. Reibscheibe nach Anspruch 6, **dadurch gekennzeichnet, dass** die Begrenzung durch eine Anschlaglasche (18) erreicht wird, die von dem Bereich (34) des Umfangsteils getragen wird, welcher einen Belag (14) trägt, und die gegen den anderen Bereich (33) gerichtet ist, welcher den anderen Belag (13) trägt.

8. Reibscheibe nach Anspruch 7, **dadurch gekennzeichnet, dass** die Beläge (13, 14) an den Bereichen (33, 34) des Umfangsteils unter Vermittlung von metallischen Plättchen (13A, 14A) befestigt sind, wobei es eines dieser Plättchen (14A) ist, das eine Anschlaglasche aufweist, welche gegen den anderen Belag gerichtet ist und dabei begünstigt wird von einem Einschnitt, der in den dieses Plättchen tragenden Bereich (34) des Umfangsteils eingebracht ist.

9. Reibscheibe nach Anspruch 7, **dadurch gekennzeichnet, dass** der Umfangsteil ausgebaucht und tailliert ist, so dass mindestens einer (34) der Bereiche (33, 34), der mit einem Belag (14) verbunden ist, einen Winkel mit der Ebene des Mittelteils (10) bildet, wobei er sich dieser zum Umfang hin nähert.

10. Reibscheibe nach Anspruch 9, **dadurch gekennzeichnet, dass** die beiden mit den Belägen (13, 14) verbundenen Bereiche (33, 34) von innen nach außen gegeneinander geneigt sind.

11. Reibscheibe nach Anspruch 6, **dadurch gekennzeichnet, dass** die Scheibe (10) aus zwei Teilen (10A, 10B) besteht, die Rücken an Rücken angeordnet und mit dem Mittelteil (11) verbunden sind, wobei die beiden Teile (10A, 10B) von innen nach außen gegeneinander geneigt sind.

12. Reibscheibe nach Anspruch 6, **dadurch gekennzeichnet, dass** einer (14) der Beläge (13, 14) einen Kontaktpunkt (28) trägt, der sich an seinem äußeren Umfang axial erstreckt, und dabei begünstigt wird von einer Einbuchtung, die in den den Belag tragenden Umfangsteil (34) eingebracht ist.

13. Reibscheibe nach einem der Ansprüche 1 bis 5, **dadurch gekennzeichnet, dass** der Unterschied der axialen Hübe durch die Ermöglichung einer Erhöhung des inneren Hubes erreicht wird.

14. Reibscheibe nach Anspruch 13, **dadurch gekennzeichnet, dass** auf der Innenfläche eines Belags (14) an seinem Innenumfang Kontaktpunkte (28) aufgebracht sind, die im Bereich von am Innenumfang des anderen Belags (13) eingebrachten Aushöhlungen liegen.

15. Reibscheibe nach einem der Ansprüche 1 bis 14, **dadurch gekennzeichnet, dass** die Beläge im Axialschnitt eine rechteckige Form haben.

16. Reibscheibe nach einem der Ansprüche 1 bis 14, **dadurch gekennzeichnet, dass** die Beläge im Axialschnitt eine trapezförmige Form haben.

17. Reibscheibe nach einem der Ansprüche 1 bis 16, **dadurch gekennzeichnet, dass** die Beläge (13, 14) durch Vernietung befestigt sind.

18. Reibscheibe nach einem der Ansprüche 1 bis 16, **dadurch gekennzeichnet, dass** die Beläge (13, 14) durch Kleben befestigt sind.

19. Kupplung, insbesondere für ein Kraftfahrzeug, umfassend eine zur drehfesten Befestigung an einer Antriebswelle bestimmte Gegendruckplatte, eine Reibscheibe, die an ihrem Außenumfang Reibbeläge trägt und dazu bestimmt ist, drehfest an einer getriebenen Welle befestigt zu werden, eine Druckplatte, einen an der Gegendruckplatte befestigten Deckel, axial wirksame elastische Mittel, die zwischen dem Deckel und der Druckplatte wirken, wobei die Druckplatte drehfest aber axial verschiebbar mit dem Deckel verbunden ist, **dadurch gekennzeichnet, dass** die Reibscheibe nach einem der Ansprüche 1 bis 18 ausgebildet ist.

20. Kupplung nach Anspruch 19, **dadurch gekennzeichnet, dass** die Gegendruckplatte die Sekundärplatte eines Zweimassen-Dämpfungsschwungrades mit einer Primärplatte und einer Sekundärplatte ist.

21. Kupplung nach einem der Ansprüche 19 oder 20, **dadurch gekennzeichnet, dass** sie mit einer Vorrichtung zum Ausgleich von Spiel aufgrund von Verschleiß der Beläge ausgerüstet ist.
